# EUROPEAN PATENT APPLICATION

(11) **EP 3 261 074 A1**
(43) Date of publication of application: **27.12.2017**
(21) Application number: 16175196.1
(22) Date of filing: 20.06.2016
(51) Int. Cl.: G08G 1/0967, B62D 15/00, G01C 21/26, G05D 1/02, G08G 1/14, G08G 1/00, B62D 15/02

(54) **METHOD FOR AUTONOMOUS VEHICLE PARKING**

(71) Applicant: Volvo Car Corporation, 40 531 Göteborg (SE)
(72) Inventor: Lazic, Nenad, 41263 Göteborg (SE); Rothoff, Marcus, 41729 Göteborg (SE); Coelingh, Erik, 44695 Älvängen (SE)
(74) Representative: Volvo Car Corporation

(57) **Abstract**

A method implemented in a parking management system for parking autonomous vehicles in a parking slot free manner, a method implemented in an autonomous vehicle and an autonomous vehicle adapted to perform the method. The method comprises the steps of requesting to park in a parking space. A parking position is determined based on the vehicle length and width and, based on the length and width of the vehicles forming the vehicle cluster at which the vehicle is intended to be parked. The method is a very flexible way of managing parking space for autonomous vehicles.

## Description

### TECHNICAL FIELD

The present disclosure relates to a method implemented in a parking management system for parking autonomous vehicles in a parking slot free manner, a method implemented in an autonomous vehicle for parking in a parking slot free manner, and an autonomous vehicle adapted to implement the method. The method is based on assigning a parking positon for a vehicle on the basis of the length and width of the vehicle, and thus form vehicle clusters based in individual vehicles length and width.

### BACKGROUND

Cities are expanding and the available area and especially parking area is constantly diminishing. With decreasing area and an increasing demand for area e.g. for constructing buildings such as offices stores etc. increasing prices follow. With increasing costs people are striving towards optimizing the parking area by positioning the parking slots within a parking space as efficiently as possible, by designing parking spaces as efficient as possible or by increasing the possibilities for a vehicle free community. However, traditional parking spaces are always governed by the parking slots, i.e. the squares which show the user the boundaries in which the vehicle must be parked, and a lot of space is wasted through the void between the vehicles.

Autonomous vehicles are increasing in numbers and the autonomous driving and parking technology are constantly improving. It has been realized as the development of autonomous vehicles has progressed that the vehicles can be closely packed in the width direction. The international patent application no. WO2015114592 A1 discloses a device and a method for automated parking of autonomous vehicles. The objective is to reduce parking movements and parking space. In the example used, each parking lot is optimized in the width direction but the concept is still focusing on using defined squares for each vehicle. Further, the vehicles cannot be displaced in a sufficiently flexible manner as the grouping of the vehicles is linear and parking slot based.

The international patent application no. WO2015117633 A1 discloses a method for automatically park vehicles based on an environmental factor such as the direction of sun rays. The vehicles can be automatically displaced dependent on the position of the sun to reduce the temperature inside of the vehicles for example. This method requires a large parking area and as such, it is not feasible in an urban environment in which parking area is in shortage as well as expensive.

The US patent application no. US 20120188100 A1 discloses a method for autonomous parking. Information parameters are said to be based on parking slot information, which may include parking slot size data, e.g. based on the vehicle size. The method includes the step of providing a customized parking slot based on vehicle information for example. Even still, this method is relying on parking slots and the grouping of parking slots in an unfavorable manner which tends to be symmetric and not very flexible.

It appears that there are needs for providing an improved method which can be implemented in vehicles and parking management systems.

### SUMMARY

An object of the present disclosure is to provide a solution to the above mentioned drawbacks, or to at least reduce one or more of the drawbacks, or to provide a useful alternative thereto. The object is at least partly met by a method implemented in a parking management system for parking autonomous vehicles in a parking slot free manner. The method comprises the steps of; receiving a signal from an autonomous vehicle carrying information of a request to park, the autonomous vehicle having a length and a width. Determining a parking position within a parking space based on at least the autonomous vehicles length and width. The parking position is associated with a vehicle cluster based on individual vehicle's length and width of a number of vehicles within the vehicle cluster and, sending the parking position to the autonomous vehicle.

The method provides for an efficient manner of creating vehicle clusters based on at least the vehicles length and width. This enables a space efficient way of parking vehicles in a parking slot free manner, as well as a good vehicle cluster management abilities. It also enables an easy rearrangement method for vehicles within a parking space. It enables the clustering of vehicles around physical objects such as columns within a parking space based on individual vehicles length and width. It may further be that the parking spaces have physical objects which restrict how vehicles can move within the parking space such as columns, pillars, road barriers or the like. It may thus be advantageous to park vehicles based on their length and width with respect to such objects in order to enable a smoother and better parking methodology.

The method may further comprise the step of; forming a temporarily route by rearranging one or more vehicle clusters enabling the vehicle to reach the parking position. By rearranging one or more vehicle clusters, a route may be created to position the vehicle by a suitable vehicle cluster.

A safety distance may be added to the length and/or the width of each vehicle, the safety distance may be from 2-50 cm, preferably 5-20 cm. The method enables vehicle to be parked very close to each other. As the vehicles are autonomous, the distance between each vehicle does not need to take into account a user stepping in or out from the passenger compartment. It may be favorable however to take the vehicles lengths and width into account and add a safety margin. The safety margin may be based on vehicle data such as if the vehicle is provided with a towing hook, or extra lights at the front, type of wheels or the like.

The vehicle cluster may be formed on at least one more additional parameter in addition to the length and the width of the vehicles. The vehicle cluster may further be based on one or more of the following parameters; fuel level of vehicle, exit time, given parking time such as requested parking time, paid parking time, available parking time, average vehicle cluster parking time, weight of one or more vehicles, height of one or more vehicles, one or more evacuation factors, length to width relationship, width to length relationship, or combinations thereof.

Just as a matter of example, vehicles low on fuel, e.g. battery energy level being lower than 50 % of maximum capacity, may need refueling. It may be advantageous to temporarily cluster those vehicles requiring refueling; sending them to a refueling station, and thereafter identify a new parking position for the vehicle(s). Another example; the vehicle may be clustered, or grouped, with other vehicles having substantially the same exit time, or to facilitate the exit of a vehicles having earlier exit time. The time interval for defining a vehicle cluster based on the exit time may be ± 30 minutes, preferably ± 15 minutes. The exit time may be expressed as parking time in different forms such as requested parking, paid parking time, available parking time or the like. Vehicle clusters may be formed by setting an average parking time, or median parking time. For example; a vehicle cluster of 10 vehicles may have an average parking time of 1 hour, i.e. the exit time of in average one hour for the vehicle cluster. A new vehicle which has requested 1 hour parking may thus be clustered with the mentioned vehicle cluster.

The method, such as step b), may further include evaluating the repositioning of a vehicle cluster in the parking space in order to provide the parking position. The repositioning may be performed by displacing one or more vehicles of the vehicle cluster, to a second vehicle cluster. Optionally it may include the rearrangement of a vehicle cluster, or to displace the whole vehicle cluster. The step b) may thus comprise the step of repositioning the vehicle cluster in the parking space to provide the parking position, and/or additional parking positions.

The method may comprise the step of; redirecting or creating a vehicle path between at least two vehicle clusters by changing the shape or vehicle constellation of at least one of the at least two vehicle clusters. Just as a matter of example, when a new vehicle is requesting to park in the parking space, the parking management system may reevaluate the vehicle clusters in order to find a more appropriate clustering of the vehicles. Such reevaluation may render that a new route through the parked vehicles would enable a better vehicle clustering. By re-routing vehicle routes, a better and more versatile parking space can be provided. The parking space is not restricted by either pre-defined parking slots or regular routes formed between such parking slots. The method may thus comprise the step of forming a vehicle path between at least two vehicle clusters. In this manner, a dynamic rearranging of vehicles may be in order to find suitable routes for the vehicle in the parking space.

The method may comprise the step of forming a vehicle cluster based on one or more parameters. The vehicle requesting to park may be directed to the newly formed vehicle cluster, or forming the basis for a new vehicle cluster. The method may for example comprise the step of forming a vehicle cluster based on a number of vehicle's length and width, and expected exit time from the parking space. Basing vehicle clusters on the exit time, i.e. when the vehicle is expected to exit from the parking space, or when the vehicle is to be positioned on a pick up position, has been found to be advantageous as it simplifies the entering and the exiting of vehicles from the parking space.

The method may comprise the step of forming a vehicle cluster around one or more vehicles having fossil fuel as main source of power, or as only source of power. As the vehicles may be rearranged within the parking space, it is believed without being bound by theory that the rearrangement of vehicles having fossil fuel as main source of power, or as only source of power, should be kept to a minimum. In order to reduce the amount of unnecessary consumption of fossil fuel, vehicle cluster can be formed with such vehicles at the center, or at least at a designed position within a vehicle cluster.

The method may comprise the step of temporarily grant authority to a third party, such as to the parking management system, to displace the vehicle within the parking space. As rearrangement may be needed to facilitate an efficient parking management, it may be that the vehicle owner, user or driver, may be required to authorize the parking management system to displace the vehicle when the vehicle is parked in the parking space. Just as a matter of example, there may be an option to permit displacement, or to not permit displacement of the vehicle while being parked in the parking space. If the authorization has been given, such authorization may be restricted in time e.g. during a few hours or simply during the parking time. An authorization may optionally or additionally be restricted to only be valid for the area defined by the parking space, or including the proximity of the parking space.

According to an aspect, the disclosure also relates to a method implemented in an autonomous vehicle for parking in a parking slot free manner, the autonomous vehicle having a length and a width. The method comprising the steps of;
a) sending a signal from the autonomous vehicle carrying information of a request to park in a parking space to a parking management system;
b) receiving a determined parking position within a parking space. The parking position being associated with a vehicle cluster based on individual vehicle's length and width of a number of vehicles within the vehicle cluster.

Further disclosed herein is an autonomous vehicle adapted to perform a method as disclosed herein. Further disclosed herein is a parking service computerized communication system for implementing the method as disclosed herein.

In general terms, the method concerns a method implemented in a parking management system for parking autonomous vehicles in a parking slot free manner, a method implemented in an autonomous vehicle and an autonomous vehicle adapted to perform the method. The method comprises the steps of requesting to park in a parking space. A parking position is determined based on the vehicle length and width and, based on the length and width of the vehicles forming the vehicle cluster at which the vehicle is intended to be parked. The method is a very flexible way of managing parking space for autonomous vehicles.

### BRIEF DESCRIPTION OF THE DRAWINGS

Non-limiting embodiments of the present invention will be described with reference to the accompanying drawings in which;
figure 1 shows a schematic view of a vehicle communicating with parking management system, and an illustrated view of a parking space;
figure 2 shows a schematic view of a vehicle and the functions associated with the vehicle;
figure 3 shows how a vehicle is assigned with a parking position;
figures 4-6 show the rearrangement of two vehicle clusters to provide a route between a first and a second vehicle cluster and;
figure 7 shows a process scheme of a method implemented in a parking management system for parking autonomous vehicles in a parking slot free manner

### DETAILED DESCRIPTION OF PREFERRED EMBODIMENTS

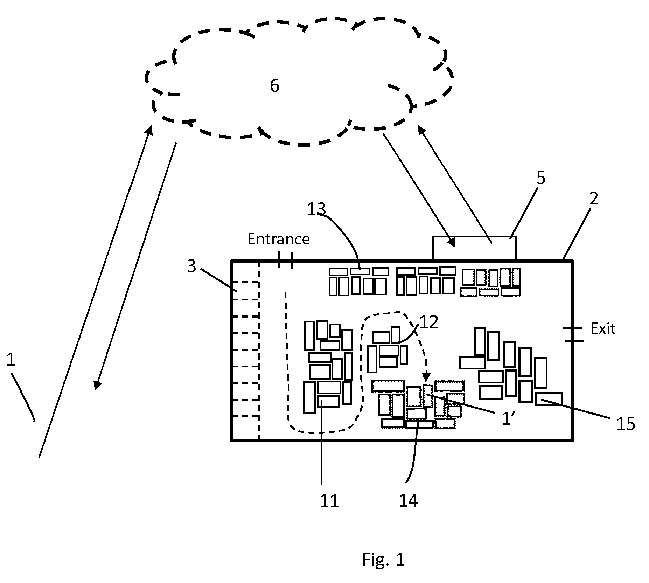

Figure 1 shows a schematic figure of a vehicle 1. The autonomous vehicle 1 has an autonomous driving function in terms of that it permits a driver to become a passenger after initiating the autonomous driving function whereby the vehicle autonomously may transfer the passenger to a selected destination. The vehicle further comprises an autonomous parking function. The vehicle may be a fully autonomous vehicle, a semi-autonomous vehicle.

A parking space 2 is schematically shown with a view from above. The parking space 2 may be indoors or outdoors. The parking space 2 may be provided with a number of parking slots 3 indicated with dashed lines, although for the purpose of the present invention, parking slots and or predefined slots are not required. The parking slots 3 are standardized in terms of that they are sized to fit substantially any kind of automobile on the market and used in traffic in Europe permitted to drive under a B driving license. A parking space management system 5 is arranged at the parking space 2. The vehicle 1 and the parking space management system are arranged to communicate via a cloud based communication service 6 over e.g. a wireless cellular network such as 4G or 5G, or a long-range or short range communication systems or networks as disclosed below. Further shown in figure 1 are a number of vehicle clusters; a first vehicle cluster 11; a second vehicle cluster 13; a third vehicle cluster 13; a fourth vehicle cluster 14; a fifth vehicle cluster 15; which will be discussed in greater detail below.

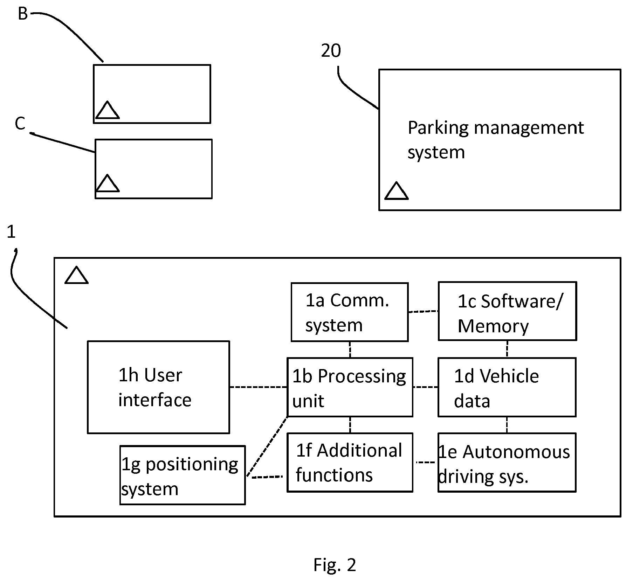

Figure 2 shows a schematic illustration of the vehicle 1, a first and a second additional vehicle B, C, and the parking management system 20. The vehicle 1 is provided with a communication system 1 a, a processing unit 1 b, software and memory capacity 1 c, vehicle data 1d, an autonomous driving system 1 e, additional functions 1f, positioning function 1 g, and a user interface 1 g. The additional vehicles B and C are provided with similar or identical features.

The communication system 1 a can support long-range or short range communication. Long range communications include one or more of the following, but are not limited to; UMTS, GSM, WiMAX, LTE or combinations thereof. Short range communications include one or more of the following, but are not limited to; DSRC, ITS G5, device to device mode of cellular network, Bluetooth, WiFi or combinations thereof.

The processing unit 1 b is responsible for processing data, and governs the interaction between the other systems and functions. It can be an on-board computer, CPU having one or a plurality of cores, accelerated processing unit (APU) also referred to as an advanced processing unit. The CPU may comprise application programming interfaces, APIs, configured to specify how software components may interact with each other.

The software/memory module 1 c implements the algorithms, i.e. the autonomous parking function, and may be slightly different dependent on whether a decentralized mode or centralized mode, or combinations thereof is implemented. In a decentralized mode, the vehicle themselves communicate, organize and decide how collaborate movement of the vehicles is executed. In a centralized mode, the vehicle receives information, processes and executes data received from a central entity.

Vehicle data 1d is gathered from the vehicle systems such as steering, engine, damping, braking, sensors, radar, LIDAR, tires, Flexray, CAN, or combinations thereof.

The autonomous driving system 1e includes one or more, but is not limited to, sensors such as camera, optical sensors, LIDAR, radar, IR, or the like. The sensors are generally adapted to monitor the vehicles surroundings short range and/or long ranges surroundings. The autonomous driving system further comprises a steering and velocity control arrangement adapted to directly or indirectly, steer the vehicle. The yaw rate of the vehicle may be adjusted for example. Engine and braking control arrangement is further included herein. The system may thus control acceleration and the deceleration of the vehicle, engine braking, braking by activating the wheel brakes, and increasing or decreasing the power output from the engine.

The additional functions 1f can be systems supporting secondary systems such as sensors and communication unit interfaces such as a mobile phone interface.

The positioning system 1g can include but is not limited to one or more of the following; GPS, WiFi, magnetic strips, cameras, optical systems, IR, laser, or combinations thereof.

The user interface 1 h enables a user to interact with the parking management system and can be in the form of voice recognition, gesture recognition, touch screen, motion sensors, keypad, display, cameras, face recognition, buttons, or combinations thereof.

Turning back to figure 1, the vehicle 1 or a user of the vehicle 1, issues a command for parking in the parking space 2. The parking management system receives a signal from the vehicle 1 carrying information of a request to park. The parking management system determines a suitable parking position within the parking space 2 based on the vehicle's length and width, in this case the suitable parking position is determined to be at the position referred to as 1' in the fourth vehicle cluster 14. The vehicle length and width, and optionally additional vehicle data may be transmitted by the vehicle 1 to the parking management system, or be retrieved from a cloud based data storage facility. The position is determined by a number of vehicles within a vehicle cluster, in which cluster the number of vehicles have been positioned based on their length and width. The determined position is forwarded to the vehicle 1.

The parking management system may further need to determine a suitable route within the parking space 2 to the determined position, and inform the vehicle 1 of the determined route. The route, indicated by the dashed arrow, may be temporarily created by relocating one or more vehicles already parked within the parking space 2 for example. The route may be forwarded to the vehicle 1 in advance or be forwarded to the vehicle 1 when the vehicle 1 enters the parking space 2, or is in the proximity of the parking space 2. In figure 1, a suitable route has been created between two clusters of vehicles namely the first cluster 11 and the second cluster 12. It has been determined that the available space between the first cluster 11 and the third cluster 13 is going to be used for other vehicles within short and the arrival time of the vehicle 1 may be coinciding with the displacement of those vehicles.

When the vehicle 1 enters the parking space 1, the vehicle 1 may navigate to the determined position via the vehicles own systems, and/or via a navigation system arranged in the parking space 2. The parking management system may optionally or additionally provide the vehicle 1 with a digital map over the parking space 2. The digital map may be a digital map over the current status of the vehicle within the parking space 2, or a predicted map in which future displacements, additions or removals of vehicles within the parking space has been taken into account. Hence, in general terms, the method may include a step in which the vehicle is provided with a digital map over the parking space and the position of the vehicles currently parked within the parking space, and/or a prediction of the positions of the parked vehicles at the time when the requesting vehicle arrives at the parking space.

When arriving to the near proximity of the determined parking space, the vehicle 1 initiates autonomous parking to park at the determined parking position 1'. After being parked, the vehicle 1 confirms to the parking management system that a successful parking has been performed and the parking management system updates the data base.

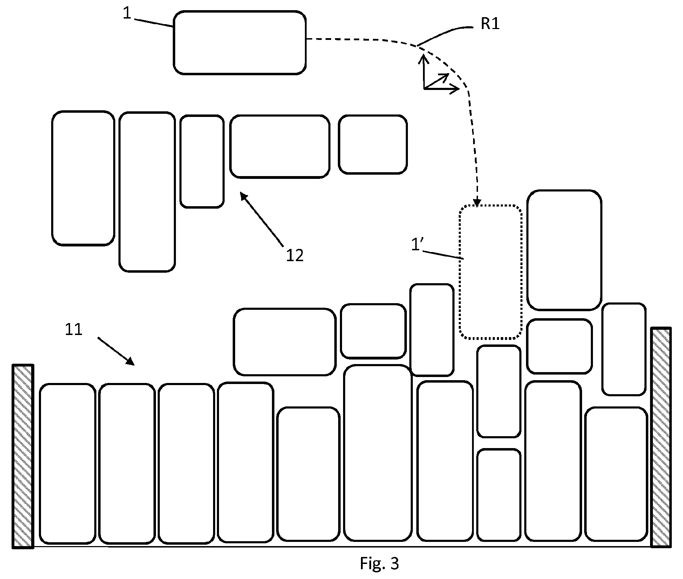

With reference to figures 3-6, the vehicle 1 has substantially reached the proximity of the determined parking position 1' and is autonomously driving along the determined route R1. Following the data received from the vehicle 1, the parking management system has detected that the vehicle 1 can be parked at the position indicated with reference 1'. The route to the parking positon 1' has been determined based on the vehicles 1 predicted turning surface.

A predicted turning surface (PTS) of the vehicle 1 can be derived from the formulas: PTS = f (L, W, Sd, Tr, Of, Ob)
and
Tr = f (steering angle)

Wherein L = Length of the vehicle, W = width of the vehicle, Sd = preset safety distance, Tr = turning radius, Of = Overhang front, Ob = overhang back.

Based on the prediction, the parking management system can determine that the vehicle 1 may be able to turn to the parking position 1' to reach the first vehicle cluster 11. The vehicle 1 subsequently performs an autonomous parking at the parking position 1' and joins the first vehicle cluster 11 based on at least the vehicles 1 length and width.

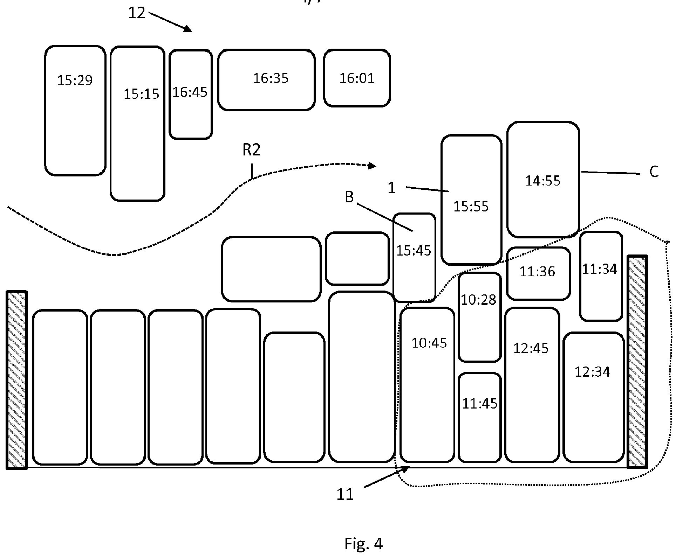

Figures 4-6 illustrates the creation of a second route R2. The parking management system acknowledges that a second route R2 can be created by displacing a number of vehicles 1, B, C. The three vehicles 1, B, C are regrouped with the second vehicle cluster 12. The second vehicle cluster 12 are clustered based on each vehicles length and width, but also on the vehicles indicated exit time, i.e. the time at which the vehicle is predicted to exit the parking space. The predicted exit time can be based on the paid parking time, indicated parking time, available parking time just as a matter of example.

As can be gleaned, the exit time of some of the vehicles of the first and the second cluster are noted on respective vehicles. The first vehicle cluster 11 is visualized by the dashed line. As can be noticed, the vehicles 1, B, C have an exit time more corresponding to the second vehicle cluster 12. As a new route R2 is to be created, the vehicles are regrouped with the second vehicle cluster 12 based on their length and width but also on the basis of the exit time. The average exit time of the first vehicle cluster 11 is a few hours earlier than the average exit time of the second cluster 12. The vehicle 1, which was designated with the parking position 1' is now reassigned a new parking position 1" clustering the vehicle 1 with the second cluster 12.

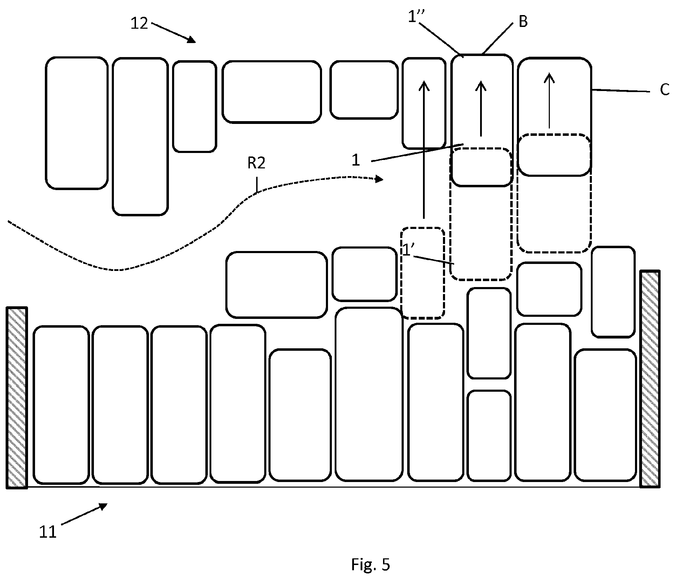

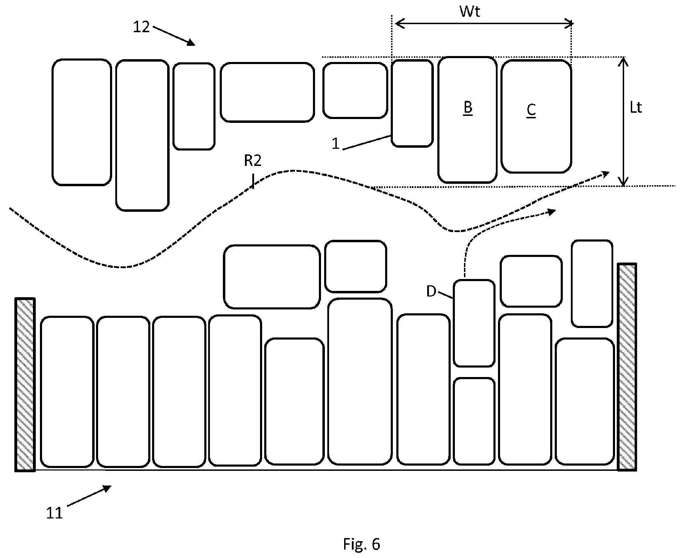

The second vehicle cluster 12 is still using the vehicles length and width in order to designate a parking position for the vehicles 1, B, C. Following the figures 5 and 6, the vehicles 1, B, C are autonomously moved to the second cluster 12. A fourth vehicle D has now been given an exit route R2. The three vehicles 1, B, C are superimposed with the condition that they can be clustered with the second vehicle cluster 12 only if none of the vehicles is longer than the set vehicle length, indicated with the arrow in figure 6. The width of the vehicles 1, B, C are further considered and is set not to exceed a preset width, as the route R2 would not be sufficiently large for the fourth vehicle D to exit.

In view of the above, the vehicle clusters may be based on exit time of a selected number of vehicles in addition to the vehicles length and width. The exit time may be an average exit time of a number of vehicles.

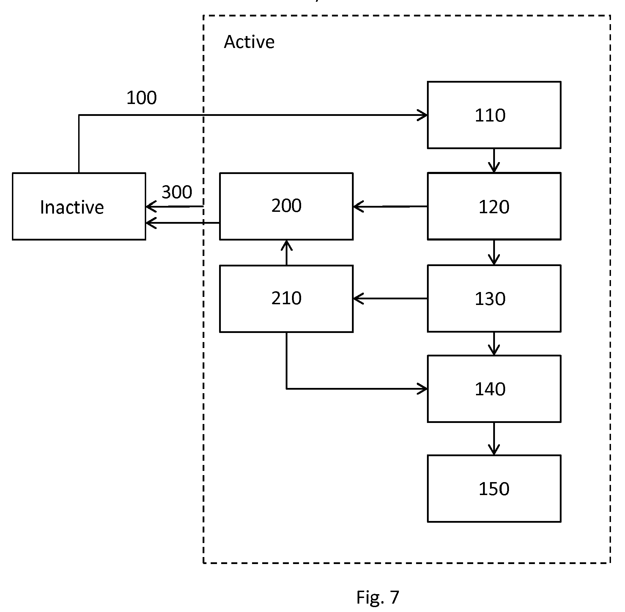

Figure 7 shows a schematic process illustrating the method. The dashed square indicated that the parking management system is activated. At step 100; a vehicle sends a requests to park within the parking space. At step 110 the dimensions of the vehicle and the predicted exit time is registered. At least the length and the width of the vehicle are registered. The length and the width of the vehicle may be forwarded by the vehicle itself, or be retrieved form a data base on the basis of the vehicle identification such as the license plate number of the vehicle. Additional parameters may be registered. Such additional parameters may be vehicle weight, height and/or vehicle accessories such as if the vehicle is provided with a tow bar for example.

At step 120 the parking management system evaluates if the vehicle can be clustered with existing vehicle clusters based on at least the vehicles length and width or if the vehicle can form the basis of a new vehicle cluster.

At step 130; if the result of the evaluation is that a parking position can be assigned to the requesting vehicle, the suitable parking position is forwarded to the vehicle. Preferably the vehicle is assigned to a vehicle cluster e.g. defined by the predicted exit time of the vehicle. Other parameters defining a vehicle cluster can be the vehicles weight for example. It may be desirable to impose weight conditions of a vehicle cluster e.g. so that the vehicle cluster is not exceeding a predetermined weight unit/area unit ratio. If no position is available, it may be needed to rearrange the vehicles in order to provide a parking position.

At step140 the parking management system guides the vehicle to the designated parking position and/or the vehicle performs an autonomous parking.

At step 150 the data base is updated with the newly arrived vehicle.

At step 200 if the vehicle cannot be assigned to an existing vehicle cluster, form a new cluster, or reassign any vehicles to form new vehicle clusters, i.e. to form modified vehicle clusters, the request for parking is rejected. The vehicle is informed that the parking space is full. The parking management system is thereafter inactivated and awaiting a new request for parking. As an option, the parking management system may check if there is a free parking slot if the parking space has regular parking slots. If no parking slot is free, the request is rejected and the vehicle is informed that the parking space is full. The parking management system is inactivated and awaiting a new request.

At step 210 the parking management system evaluates if one or more clusters, or vehicles, can be displaced to create new vehicle clusters in order to provide a parking position for the requesting vehicle. If it is not possible, the request is rejected. If it is possible, the parking management system guides the vehicle to the designated parking position and/or the vehicle performs an autonomous parking.

300 the parking process can be terminated by the vehicle or by the parking management system at any time whereby the parking management system is inactivated.

## Claims

1. A method implemented in a parking management system for parking autonomous vehicles (1, B, C, D) in a parking slot free manner, said method comprising the steps of;
a) receiving a signal from an autonomous vehicle (1) carrying information of a request to park, said autonomous vehicle (1) having a length and a width;
b) determining a parking position within a parking space (2) based on at least said autonomous vehicles length and width, said parking position (1') being associated with a vehicle cluster (11, 12, 13, 14, 15) based on individual vehicle's length and width of a number of vehicles within said vehicle cluster (11, 12, 13, 14,15) and;
c) sending said parking position (1') to said autonomous vehicle (1).

2. The method according to any one of the preceding claims, whereby said method further comprises the step of; forming a temporarily route (R1, R2) by rearranging one or more vehicle clusters (11, 12, 13, 14, 15) enabling said vehicle (1) to reach said parking position (1').

3. The method according to any one of the preceding claims, whereby a safety distance is added to said length and said width of each vehicle, said safety distance is from 2-50 cm, preferably 5-20 cm.

4. The method according to any one of the preceding claims, whereby said vehicle cluster (11, 12, 13, 14, 15) is further based of one or more of the following parameters; fuel level of vehicle, exit time, given parking time such as requested parking time, paid parking time, available parking time, average vehicle cluster parking time, weight of one or more vehicles, height of one or more vehicles, one or more evacuation factors, length to width relationship, width to length relationship, or combinations thereof.

5. The method according to any one of the preceding claims, whereby said step b) further includes evaluating a repositioning of said vehicle cluster (11, 12) in said parking space (2) in order to provide said parking position (1').

6. The method according to any one of the preceding claims, whereby said step b) comprises the step of repositioning said vehicle cluster (11, 12) in said parking space (2) to provide said parking position, and/or additional parking positions.

7. The method according to any one of the preceding claims, whereby said method comprises the step of; redirecting or creating a vehicle path between at least two vehicle clusters (11, 12) by changing the shape or vehicle constellation of at least one of said at least two vehicle clusters (11, 12).

8. The method according to any one of the preceding claims, whereby said method comprises the step of; forming a vehicle path (R2) between at least two vehicle clusters (11, 12).

9. The method according to any one of the preceding claims, whereby said method further comprises the step of; forming a vehicle cluster (11, 12, 13, 14, 15) based on a number of vehicle's length and width, and expected exit time from said parking space (2).

10. The method according to any one of the preceding claims, whereby said method comprises the step of; forming a vehicle cluster (11, 12, 13, 14, 15) around one or more vehicles having fossil fuel as main source of power, or as only source of power.

11. The method according to any one of the preceding claims, whereby said method further comprises the step of; temporarily grant authority to said parking management system to displace said vehicle (1) within said parking space (2).

12. A method implemented in an autonomous vehicle (1) for parking in a parking slot free manner, said autonomous vehicle (1) having a length and a width,
said method comprising the steps of;
a) sending a signal from said autonomous vehicle (1) carrying information of a request to park in a parking space (2) to a parking management system;
b) receiving a determined parking position (1') within a parking space (2), said parking position being associated with a vehicle cluster (11, 12, 13, 14, 15) based on individual vehicle's length and width of a number of vehicles within said vehicle cluster (11, 12, 13, 14, 15).

13. An autonomous vehicle adapted to perform a method according to any one of the preceding claims.

14. A parking service computerized communication system for implementing the method according to any one of the preceding claims.
